# FASCICULE DE BREVET EUROPEEN

(11) **EP 2 786 648 B1**
(45) Date de publication et mention de la délivrance du brevet: **30.03.2016**
(21) Numéro de dépôt: 14163181.2
(22) Date de dépôt: 02.04.2014
(51) Int. Cl.: A01B 59/041, A01B 61/02

(54) **Dispositif d'attelage perfectionné**
Verbesserte Kupplungsvorrichtung
Improved coupling device

(30) Priorité: 03.04.2013 FR 1352989
(43) Date de publication de la demande: 08.10.2014
(73) Titulaire: Kuhn-Audureau S.A., 85260 La Copechagnière (FR)
(72) Inventeur: Gautron, Pascal, 85250 Saint-Fulgent (FR); Robreteau, Maxime, 85170 Le Poire sur Vie (FR)
(74) Mandataire: Esch, Esther Evelyne

(56) Documents cités:
- DE-A1- 3 333 416
- FR-A1- 2 791 863
- US-A1- 2011 192 620

## Description

La présente invention concerne un dispositif pour rigidifier un attelage trois points d'un tracteur, cet attelage comportant deux bras inférieurs munis de points d'attelage pouvant être reliés à des organes d'accrochage d'un bâti d'une machine comportant des outils déportés latéralement d'un côté du tracteur pendant le travail.

Un tel dispositif est destiné à une machine portée, telle qu'une faucheuse, une débroussailleuse, une élagueuse ou une broyeuse, employée dans l'agriculture, la sylviculture ou l'entretien des bords de routes. Ces machines sont portées par les bras inférieurs du tracteur, et par au moins une bielle supérieure reliant le troisième point du tracteur à une partie haute du bâti de la machine. Ces machines comportent des outils qui, au moins pendant le travail, sont déportés latéralement d'un côté du tracteur. A cet effet, les outils sont généralement portés par un bras articulé relié au bâti de la machine afin d'étendre le champ d'action de la machine au travail. Le poids de ces machines en position déportée des outils tend à déstabiliser l'attelage du tracteur et le bâti de la machine. Ceci entraîne, outre un mauvais contrôle de la position des outils, des contraintes importantes sur les moyens d'attelage de la machine et sur l'attelage du tracteur, notamment sur les bras inférieurs ainsi que leurs vérins et bielles de relevage. Ces composants sont donc potentiellement sujets à une détérioration rapide.

Pour tenter de pallier ces inconvénients, un premier dispositif, connu pour rendre l'attelage du tracteur plus rigide et plus stable, comporte deux bielles supplémentaires disposées entre l'attelage du tracteur et le bâti de la machine. Ces bielles supplémentaires s'étendent du bas vers le haut dans la direction d'avancement du tracteur. Elles sont reliées à une partie basse du bâti de la machine. Cette liaison au bâti peut être directe. Elle peut aussi être indirecte, via par exemple une poutre transversale elle-même accrochée au bâti. Les points d'accrochage inférieurs des bielles supplémentaires sont, perpendiculairement à la direction d'avancement, plus ou moins espacés. Les points d'accrochage supérieurs des bielles supplémentaires sont reliés au troisième point du tracteur, et s'étendent dans un plan vertical médian du tracteur ou à proximité immédiate de ce plan. Cette disposition des points d'accrochages supérieurs ne permet pas au premier dispositif d'opposer une résistance suffisante au couple de renversement de la machine qui tend à déstabiliser l'attelage du tracteur, notamment dans la position déportée latéralement des outils. Ce manque d'efficacité est amplifié par les jeux présents dans les différents moyens d'attelage. Il s'agit notamment des jeux au niveau des points d'accrochage inférieurs et supérieurs des bielles supplémentaires. Il s'agit également des jeux entre les points d'attelage des bras inférieurs et les organes d'accrochage du bâti de la machine et des jeux de ces mêmes bras inférieurs sur leurs articulations au tracteur.

Pour tenter d'apporter une réponse à ce problème, un deuxième dispositif connu se distingue du premier par le fait que les points d'accrochage supérieurs des bielles supplémentaires sont davantage espacés par rapport au plan vertical médian du tracteur. La distance qui sépare ces points d'accrochage supérieurs est par exemple sensiblement égale, ou légèrement inférieure, à la distance qui sépare les points d'attelage des bras inférieurs. A cette fin, les bielles supplémentaires sont connectées à des ancrages fixés sur une échelle d'attelage connue de l'Homme du métier et faisant partie de l'attelage d'un grand nombre de tracteurs. Un inconvénient majeur de cette solution est que de tels ancrages sont spécifiques à chaque modèle de tracteur. L'utilisateur ayant dans son parc plusieurs tracteurs différents doit donc s'équiper de plusieurs lots d'ancrages différents pour assurer l'adaptation du deuxième dispositif à ces différents tracteurs. Ceci représente un surcoût important à l'achat de ce dispositif. A défaut, la polyvalence du deuxième dispositif vis-à-vis de ces tracteurs est compromise.

Un troisième dispositif est décrit dans le document FR 2 791 863. Ce dispositif comporte une traverse qui s'étend entre les bras inférieurs du tracteur, et ces derniers portent la traverse par ses extrémités latérales. La partie supérieure de la traverse porte un moyen d'attache. Ce dernier est formé par deux pattes placées aux extrémités latérales de la traverse, et munies d'encoches en « gueule de loup » ouvertes vers l'arrière. Ces encoches sont destinées à recevoir les organes d'accrochage de la machine à porter. Chaque extrémité latérale de la traverse est liée à un bras dirigé horizontalement vers le tracteur. Chaque bras est relié à un bras inférieur respectif du tracteur au moyen d'une bride coopérant avec deux tiges filetées. La traverse et les bras qui y sont liés s'étendent au-dessous des bras inférieurs du tracteur, ce qui réduit fortement la garde au sol disponible lors de la conduite de la machine. Par ailleurs, ce troisième dispositif est destiné à être d'abord fixé aux bras inférieurs du tracteur, après quoi seulement la machine peut être attelée audit dispositif. Par conséquent, lorsque la machine est dételée pour être remisée ou employée sur un autre tracteur, le dispositif reste en place sur le tracteur, ce qui, en l'état, complique voire empêche l'utilisation d'une autre machine sur le même tracteur. Pour résoudre ce problème, l'utilisateur est tenu de retirer le dispositif du tracteur. Cette opération est cependant longue et fastidieuse car ce dispositif est lourd et encombrant, de plus il faut détacher les brides vissées. Au final, le démontage du troisième dispositif connu demeure une opération rarement effectuée, ce qui compromet l'aptitude du tracteur employé à recevoir les différentes machines que l'utilisateur possède dans son parc.

Un quatrième dispositif connu est commercialisé par le déposant et décrit comme un châssis à montage rapide dans la brochure commerciale datée de septembre 2009 relative à la faucheuse-débroussailleuse « PRO-LONGER » (marque déposée). Il diffère du troisième dispositif connu pour l'essentiel par le fait que les bras liés aux extrémités latérales de la traverse sont reliés non pas directement aux bras inférieurs du tracteur, mais à des chapes fixées sur l'essieu arrière du tracteur. Ces chapes sont spécifiques à chaque modèle de tracteur. L'utilisateur ayant dans son parc plusieurs tracteurs différents doit donc s'équiper de plusieurs lots de chapes différents pour assurer l'adaptation du quatrième dispositif à ces différents tracteurs. Ceci représente un surcoût important à l'achat dudit dispositif. En sus, l'utilisateur doit procéder, lors d'un changement de tracteur, au démontage du dispositif en vue de son remontage ultérieur sur un autre tracteur, après en avoir changé les chapes. De telles opérations sont cependant longues et fastidieuses, et compliquent l'adaptation du quatrième dispositif de stabilisation à différents modèles de tracteurs présents sur le marché.

La présente invention a pour but un dispositif qui ne présente pas les inconvénients précités.

A cet effet, une importante caractéristique de l'invention réside dans le fait que le dispositif comporte une première partie avec une première extrémité longitudinale et avec au moins un moyen d'attache pour la liaison du dispositif au bâti de la machine, que le dispositif comporte une deuxième partie en liaison coulissante avec la première partie suivant un axe longitudinal du dispositif, que la deuxième partie comporte un moyen de butée conçu pour coopérer avec un élément du tracteur, et que le dispositif comporte un moyen d'effort pour appuyer le moyen de butée contre l'élément du tracteur au moins suivant l'axe longitudinal.

L'élément du tracteur est par exemple un support d'attelage. Ce support d'attelage est notamment disposé à l'arrière et entre les bras inférieurs du tracteur. Ce support d'attelage peut suivre différentes variantes et est présent sur un grand nombre de tracteurs. L'invention vise à employer l'élément du tracteur comme moyen d'appui du dispositif, afin d'assurer une bonne polyvalence du dispositif selon l'invention vis-à-vis des tracteurs existants. Les coûts d'exploitation de la machine et/ou du tracteur sont réduits puisque l'achat d'ancrages ou de pièces d'adaptation spécifiques à chaque tracteur devient inutile.

Le au moins un moyen d'attache dont est pourvue la première partie du dispositif permet à ce dernier d'être dans un premier temps solidarisé au bâti de la machine devant être ultérieurement attelée au tracteur. Le bâti de la machine est alors aisément accessible pour procéder à cette connexion du dispositif, et le tracteur peut, pendant ce temps, continuer d'être utilisé pour d'autres travaux. Une fois la machine accrochée aux bras inférieurs du tracteur et relevée, le moyen de butée est coulissé par rapport au bâti pour venir coopérer avec l'élément du tracteur. La liaison coulissante permet de placer le moyen de butée à la distance adéquate du bâti de la machine, ce qui contribue à la polyvalence du dispositif vis-à-vis de différents tracteurs. Le moyen d'effort est actionné jusqu'à ce que l'élément du tracteur exerce en retour sur le moyen de butée, un effort suffisant pour rattraper une grande partie des jeux présents dans les moyens d'attelage de la machine et du tracteur. Le dispositif selon l'invention permet donc de rigidifier l'attelage du tracteur. Grâce à l'appui du dispositif contre l'élément du tracteur, et grâce au rattrapage des différents jeux, la stabilité de la machine attelée est considérablement améliorée. Le contrôle de la position des outils et la sécurité d'utilisation de la machine sont meilleurs. Les contraintes exercées par la machine sur l'attelage du tracteur, et notamment sur ses moyens de relevage, sont plus faibles et mieux réparties. Lorsque la machine est décrochée du tracteur, le dispositif reste en place sur le bâti. Le tracteur est dès lors prêt à recevoir une autre machine, sans opérations supplémentaires de dépose, d'où un gain de productivité et une meilleure universalité du tracteur utilisé vis-à-vis d'un parc de machines diverses. Le dispositif peut ultérieurement être remisé par déconnexion du au moins un moyen d'attache du bâti de la machine et, par rétractation dans le sens longitudinal, le dispositif occupe alors un encombrement réduit.

D'autres caractéristiques et avantages de l'invention ressortiront de la description ci-après avec référence aux figures annexées qui représentent plusieurs variantes non limitatives de réalisation du dispositif selon l'invention.

Sur ces figures :
- la figure 1 représente une vue en perspective d'une machine à laquelle le dispositif selon l'invention est destiné ;
- la figure 2 représente une vue en perspective d'un tracteur auquel le dispositif selon l'invention peut être connecté ;
- la figure 3 représente une vue en perspective d'une première variante de réalisation du dispositif selon l'invention dans la première position extrême ;
- la figure 4 représente une autre vue en perspective de la première variante de réalisation dans la deuxième position extrême ;
- la figure 5 représente une vue en perspective de la première variante de réalisation du dispositif selon l'invention connecté au tracteur ;
- la figure 6 représente une vue en perspective d'une deuxième variante de réalisation du dispositif selon l'invention dans la première position extrême ;
- la figure 7 représente une autre vue en perspective de la deuxième variante de réalisation dans la deuxième position extrême ;
- la figure 8 représente une vue en perspective de la deuxième variante de réalisation du dispositif selon l'invention connecté au tracteur ;
- la figure 9 représente une vue de dessus de la deuxième variante de réalisation.

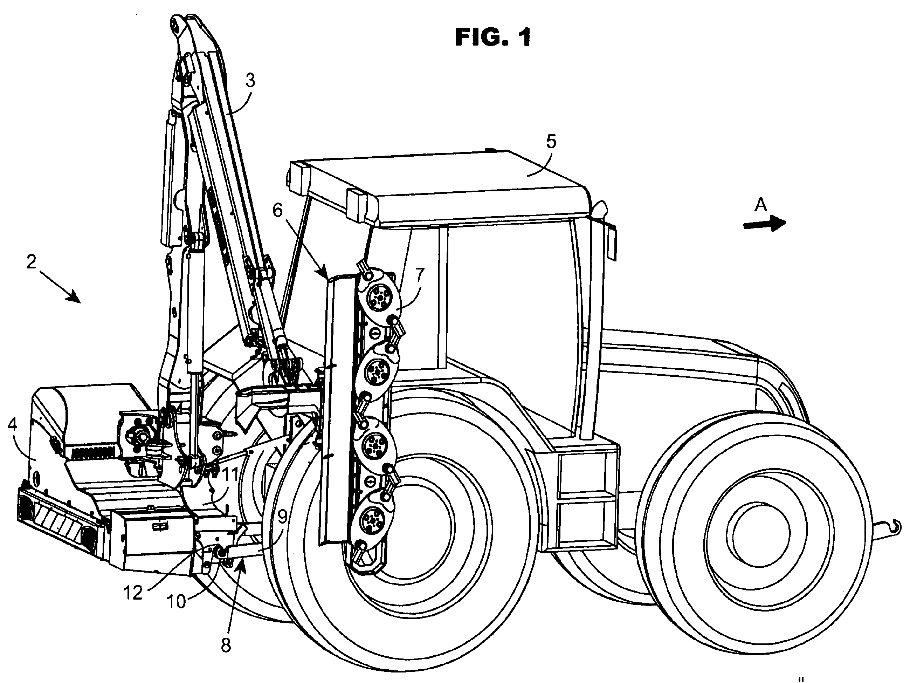

Le dispositif (1) selon l'invention est destiné à être relié à une machine (2) portée telle que celle illustrée à la figure 1. Cette machine (2) comporte un bras articulé (3) supporté par une plateforme (4) placée par exemple à l'arrière d'un tracteur (5). Celui-ci peut se déplacer dans une direction d'avancement (A). Dans la description qui suit, les notions « haut », « inférieur », « supérieur », « dessus », « avant », « arrière », « latéral », « frontal », « vertical » et « horizontal », employées pour situer et orienter le dispositif, des composants ou des moyens de celui-ci, se comprennent dispositif connecté à la machine accrochée au tracteur et en rapport au sol et à la direction d'avancement (A) du tracteur (5). Le bras articulé (3) porte un outil (6). Cet outil (6) comporte par exemple des disques de coupe (7) rotatifs pour faucher des accotements de route ou pour tailler des haies. Cet outil (6) peut aussi comporter un rotor muni de fléaux ou de marteaux pour broyer des végétaux au sol. L'outil (6) peut fonctionner en position verticale, horizontale ou inclinée par l'intermédiaire du bras articulé (3) qui permet de déplacer l'outil (6) et de le faire agir dans les trois dimensions à une distance plus ou moins grande du tracteur (5).

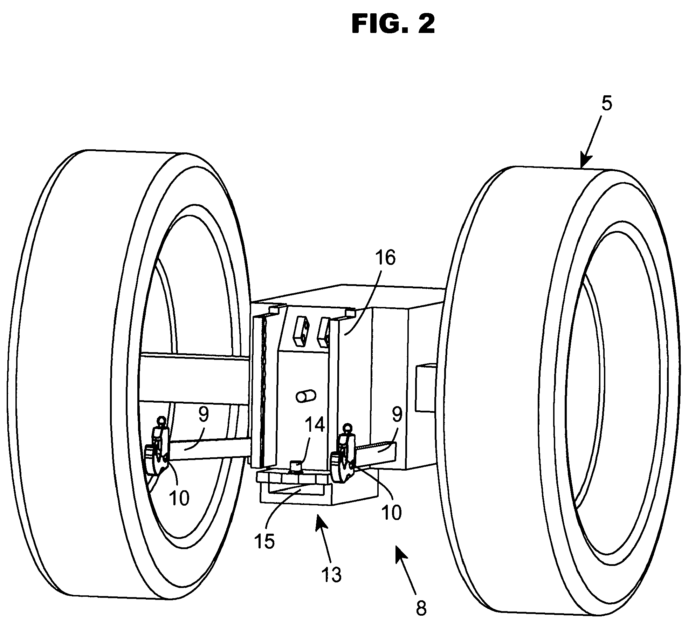

Le tracteur (5) comporte de manière connue un attelage (8) trois points qui est illustré notamment à la figure 2. Celui-ci comporte notamment deux bras inférieurs (9) munis de points d'attelage (10) pour la connexion au bâti (11) de la machine (2). Ces points d'attelage (10) peuvent être reliés à des organes d'accrochage (12) du bâti (11) de la machine (2). Les points d'attelage (10) sont par exemple des crochets ouverts vers le haut. Les organes d'accrochages (12) sont par exemple des tourillons portés par le bâti (11) de la machine (2). Au travail, les outils (6) de la machine (2) sont déportés latéralement d'un côté du tracteur (5), et le centre de gravité de la machine (2) attelée au tracteur (5) est situé entre l'outil (6) et le bras inférieur (9) situé du côté du tracteur (5) où est placé l'outil (6).

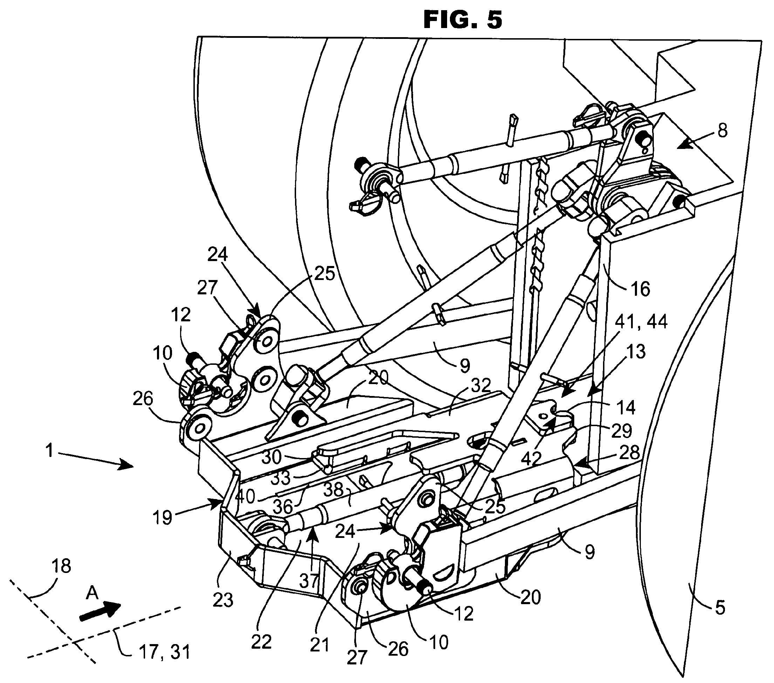

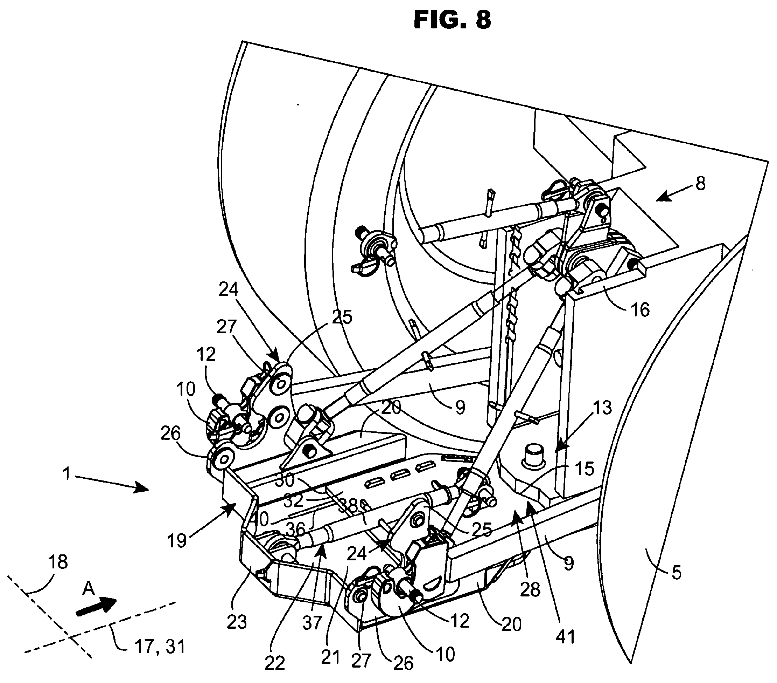

Les bras inférieurs (9) sont reliés à des articulations du tracteur (5) de manière à pouvoir être déplacés verticalement au moyen de vérins et de bielles de relevage. Le tracteur (5) comporte également un élément (13) avec lequel le dispositif selon l'invention peut coopérer. Cet élément (13) peut notamment être un support d'attelage. Ce support d'attelage est notamment disposé à l'arrière et entre les bras inférieurs (9) du tracteur (5). Dans une première variante illustrée aux figures 2 et 5, le support d'attelage comporte un piton (14), sorte de barreau cylindrique vertical solidaire du châssis du tracteur (5). Le piton (14) est placé à une hauteur du sol voisine de, ou inférieure à celle des articulations des bras inférieurs (9) au tracteur (5). Dans une deuxième variante illustrée aux figures 2 et 8, le support d'attelage comporte une fente horizontale (15) prévue pour y introduire une barre d'attelage pour tracter une machine, laquelle barre d'attelage est alors maintenue en place dans la fente horizontale (15) au moyen d'un pion vertical. Cette fente horizontale (15) est placée à une hauteur du sol voisine de, ou inférieure à celle des articulations des bras inférieurs (9) au tracteur (5). Dans une troisième variante, non représentée, le support d'attelage peut comporter une chape traversée par un axe vertical amovible. Ces différentes variantes de support d'attelage peuvent être portées, de manière amovible, par une échelle (16), ou bien être fixées rigidement à celle-ci ou au châssis du tracteur. Ainsi qu'il ressort notamment de la figure 2, l'échelle (16) est une sorte de profilé en U ouvert vers l'arrière fixé verticalement sur le châssis du tracteur (5). L'élément (13) du tracteur (5), décrit dans la présente demande, peut notamment être conforme à l'une ou l'autre des variantes précédemment décrites de support d'attelage. Un tel support d'attelage est présent sur un grand nombre de tracteurs. L'invention vise à employer l'élément (13) du tracteur (5) comme moyen d'appui du dispositif (1), afin d'assurer une bonne polyvalence du dispositif (1) selon l'invention vis-à-vis des tracteurs existants. Les coûts d'exploitation de la machine (2) et/ou du tracteur (5) sont réduits puisque l'achat d'ancrages ou de pièces d'adaptation spécifiques à chaque tracteur devient inutile.

Selon l'invention, le dispositif (1) pour rigidifier l'attelage (8) trois points du tracteur (5) comporte une première partie (19) avec une première extrémité longitudinale (23) et avec au moins un moyen d'attache (24) pour la liaison du dispositif (1) au bâti (11) de la machine (2), le dispositif (1) comporte une deuxième partie (28) en liaison coulissante avec la première partie (19) suivant un axe longitudinal (31) du dispositif (1), la deuxième partie (28) comporte un moyen de butée (41) conçu pour coopérer avec un élément (13) du tracteur (5), et le dispositif (1) comporte un moyen d'effort (37) pour appuyer le moyen de butée (41) contre l'élément (13) du tracteur (5) au moins suivant l'axe longitudinal (31). Cet axe longitudinal (31) est sensiblement parallèle à la direction d'avancement (A) lorsque la machine (2) munie du dispositif (1) est accrochée au tracteur (5).

Le au moins un moyen d'attache (24), dont est pourvue la première partie (19) du dispositif (1), permet à ce dernier d'être dans un premier temps relié, de préférence solidarisé, au bâti (11) de la machine (2) devant être ultérieurement attelée au tracteur (5). Dans cette configuration, le bâti (11) de la machine (2) est aisément accessible pour procéder à cette connexion du dispositif (1). De plus, cette connexion étant opérée préalablement à l'accrochage de la machine (2) au tracteur (5), ce dernier peut, pendant ce temps, continuer d'être utilisé pour d'autres travaux. Ensuite, le tracteur (5) est présenté au niveau de la machine (2) en position de dépose, de sorte que les bras inférieurs (9) du tracteur (5) viennent s'accrocher aux organes d'accrochage (12) du bâti (11) de la machine (2). En sus, l'utilisateur connecte une partie supérieure du bâti (11) de la machine (2) au troisième point du tracteur (5) au moyen d'une bielle supérieure. Enfin, la machine (2) est soulevée du sol par relevage des bras inférieurs (9). Les bras inférieurs (9) sont relevés à la hauteur adéquate permettant au moyen de butée (41) de la deuxième partie (28) d'être sensiblement à même hauteur du sol que l'élément (13) du tracteur (5) contre lequel le moyen de butée (41) est ultérieurement appuyé. Dans la position relevée de la machine (2), le dispositif (1) s'étend sensiblement à l'horizontale. Par la suite, la deuxième partie (28) du dispositif (1) est coulissée par rapport à la première partie (19), de sorte que le moyen de butée (41) de la deuxième partie (28) vienne coopérer avec l'élément (13) du tracteur (5). La liaison coulissante permet de placer le moyen de butée (41) à la distance adéquate du bâti (11) de la machine (2), en fonction de la configuration de l'élément (13) du tracteur (5), ce qui contribue à la polyvalence du dispositif (1). Le moyen d'effort (37) est actionné de manière à ce que le moyen de butée (41) vienne en appui contre ledit élément (13), au moins suivant l'axe longitudinal (31) du dispositif (1). De plus, le moyen d'effort (37) est actionné jusqu'à ce que l'élément (13) du tracteur (5) exerce en retour sur le moyen de butée (41), un effort suffisant pour rattraper une grande partie des jeux présents dans les moyens d'attelage de la machine (2) et du tracteur (5). Le dispositif (1) selon l'invention permet donc de rigidifier l'attelage (8) du tracteur (5). Cet effort comporte une composante orientée dans la direction d'avancement (A). Cet effort peut notamment être orienté sensiblement dans la direction d'avancement (A).

Grâce à la liaison supplémentaire de la machine (2) au tracteur (5), offerte par l'appui du dispositif (1) contre l'élément (13) du tracteur (5), et grâce au rattrapage des différents jeux, la stabilité de la machine (2) attelée est considérablement améliorée. Le contrôle de la position des outils (6) et la sécurité d'utilisation de la machine (2) sont meilleurs. Les contraintes exercées par la machine (2) sur l'attelage (8) du tracteur (5), et notamment sur ses moyens de relevage, sont plus faibles et mieux réparties. Notamment au travail, lorsque les outils (6) de la machine (2) sont fortement déportés sur le côté, le couple exercé par la machine (2) sur les bras inférieurs (9) du tracteur (5) est plus faible. Par ailleurs, le dispositif (1) assure une reprise partielle des efforts longitudinaux exercés par la machine (2) attelée sur l'attelage (8) du tracteur (5). Il en résulte une plus grande durée de vie des moyens d'attelage de la machine (2) et de l'attelage (8) du tracteur (5).

En vue de dételer la machine (2) du tracteur (5), le moyen d'effort (37) est actionné de manière à libérer le moyen de butée (41) de l'élément (13) du tracteur (5). La deuxième partie (28) est déplacée par rapport à la première partie (19) de sorte que le moyen de butée (41) soit suffisamment éloigné de l'élément (13) du tracteur (5). Cette opération est simple et requiert un effort physique réduit. Puis, par abaissement des bras inférieurs (9) et par déconnexion de la bielle supérieure, la machine (2) selon l'invention est déposée au sol, le dispositif (1) restant en place sur le bâti (11). Le tracteur (5) est dès lors prêt à recevoir une autre machine, sans opérations supplémentaires de dépose, d'où un gain de productivité et une meilleure universalité du tracteur (5) utilisé vis-à-vis d'un parc de machines diverses. Le dispositif (1) peut ultérieurement être remisé par déconnexion du au moins un moyen d'attache (24) du bâti (11) de la machine (2). Déposé, le dispositif (1) selon l'invention peut avantageusement occuper un encombrement réduit grâce à la liaison coulissante qui permet de le rétracter dans le sens longitudinal.

Selon une caractéristique avantageuse de l'invention, la première partie (19) porte deux moyens d'attache (24) pour relier le dispositif (1) au bâti (11) de la machine (2). Cette liaison se fait en au moins deux points du bâti (11) voisins des organes d'accrochage (12). Cette liaison a lieu préalablement à la mise en appui du moyen de butée (41) contre l'élément (13) du tracteur (5). Le dispositif (1) selon l'invention est donc avantageusement connecté au bâti (11) préalablement à toute opération d'attelage de la machine (2) au tracteur (5). En sus, la connexion des moyens d'attache (24) à proximité des organes d'accrochages (12) du bâti (11) apporte deux avantages. D'une part, la distance séparant les moyens d'attache (24) est relativement importante, ce qui permet une bonne reprise des efforts entre le dispositif (1) et le bâti (11) de la machine (2), suivant l'axe longitudinal (31) et perpendiculairement à celui-ci. D'autre part, le dispositif (1) selon l'invention s'étend sensiblement à même hauteur que les bras inférieurs (9) du tracteur (5), ce qui permet un rattrapage optimal des jeux dans les points d'attelage (10) des bras inférieurs (9) ainsi que dans leurs articulations au tracteur (5).

Selon une autre caractéristique avantageuse de l'invention, chaque moyen d'attache (24) comporte une patte (25) liée à la première partie (19) et au moins un élément démontable (27) pour lier rigidement la patte (25) au bâti (11) de la machine (2). De la sorte, le dispositif (1) peut être employé sur plusieurs machines, et être aisément démonté de l'une afin d'être remonté sur une autre. En sus, lorsque le dispositif (1) est relié au bâti (11) au moyen des éléments démontables (27), la liaison obtenue est sans jeux, ce qui contribue à la stabilité recherchée par l'invention.

Le dispositif (1) comporte deux extrémités latérales (26). De préférence, chaque moyen d'attache (24) est porté par la première partie (19) au voisinage immédiat d'une extrémité latérale (26) respective. De cette manière, l'encombrement latéral du dispositif (1) est sensiblement égal à la distance séparant les deux moyens d'attache (24). Ceci permet au dispositif (1) connecté au bâti (11) de la machine (2) attelée, de s'étendre entre deux plans verticaux passant par les axes géométriques longitudinaux des bras inférieurs (9) du tracteur (5). L'encombrement latéral du dispositif (1) est donc réduit.

Selon une caractéristique importante de l'invention, la deuxième partie (28) peut être déplacée par rapport à la première partie (19) entre une première position et une deuxième position. En sus, l'encombrement du dispositif (1) suivant l'axe longitudinal (31) est plus faible dans la première position que dans la deuxième position. Cette caractéristique présente plusieurs avantages. Lors de l'attelage de la machine (2) au tracteur (5), la deuxième partie (28) est au départ placée préférentiellement dans ou au voisinage de la première position. Dans cette position, la deuxième partie (28) est suffisamment éloignée du tracteur (5) pour ne pas gêner les opérations d'attelage du bâti (11) aux bras inférieurs (9), ainsi que les opérations de relevage. De plus, la première position est avantageusement utilisée pour la dépose et le remisage de la machine (2). Dans cette configuration, l'encombrement longitudinal du dispositif (1) est réduit.

Selon une autre caractéristique importante de l'invention, la deuxième partie (28) est déplacée par le moyen d'effort (37) de la première position vers la deuxième position pour mettre le moyen de butée (41) en appui contre l'élément (13) du tracteur (5). On obtient donc que le moyen de butée (41) est appuyé contre l'élément (13) du tracteur (5) au moyen d'un effort exercé par le moyen d'effort (37) sur le moyen de butée (41), lequel effort est orienté de la première position vers la deuxième position. La suppression des jeux dans les différents moyens d'attelage est obtenue par mise en tension de l'attelage (8) du tracteur (5) tendant à éloigner le bâti (11) de la machine (2) de l'élément (13) du tracteur (5), parallèlement à l'axe longitudinal (31) du dispositif (1).

De manière avantageuse, la liaison coulissante est une liaison glissière orientée suivant l'axe longitudinal (31). Ainsi, une fois la machine (2) attelée au tracteur (5) avec le dispositif (1) en butée contre l'élément (13) du tracteur (5), le dispositif (1) se comporte comme un ensemble d'une grande rigidité à même de reprendre les différents efforts et d'apporter à la machine (2) la stabilité recherchée.

De préférence, le moyen d'effort (37) comporte un élément à longueur variable (38) disposé entre la première partie (19) et la deuxième partie (28). Outre le fait de maintenir en place la deuxième partie (28) par rapport à la première partie (19) dans la position souhaitée, l'élément à longueur variable (38) agit sur la deuxième partie (28) afin de la déplacer par rapport à la première partie (19). De plus, l'élément à longueur variable (38) permet de maintenir le moyen de butée (41) en appui contre l'élément (13) du tracteur (5) afin de maintenir l'attelage (8) du tracteur (5) en tension.

L'invention prévoit notamment que la deuxième partie (28) soit délimitée par une deuxième extrémité longitudinale (29) opposée à la première extrémité longitudinale (23) et par une troisième extrémité longitudinale (30) située entre les première et deuxième extrémités longitudinales (23 et 29). En sus, le moyen de butée (41) est de préférence situé au voisinage de la deuxième extrémité longitudinale (29). Lors des opérations d'attelage de la machine (2), le moyen de butée (41) est donc placé à l'extrémité longitudinale du dispositif rapprochée du tracteur, ce qui rend ledit moyen de butée (41) bien visible et accessible. En particulier, l'utilisateur peut apprécier si le moyen de butée (41) est à même hauteur que l'élément (13) du tracteur (5), et agir si nécessaire sur le relevage du tracteur (5).

Selon une caractéristique importante de l'invention, la deuxième partie (28) comporte au moins une portion creusée (42) en direction de la première extrémité longitudinale (23) de la première partie (19). Cette au moins une portion creusée (42) est de préférence située au voisinage de la deuxième extrémité longitudinale (29).

Le moyen de butée (41) comporte avantageusement la au moins une portion creusée (42). Cette forme contribue à la polyvalence du moyen de butée (41) vis-à-vis de l'élément (13) du tracteur (5) qui peut être de constitutions variées. Ainsi, le creux (43) de la portion creusée (42) peut aisément venir en appui contre une poutrelle ou un barreau vertical, tel un piton (14) d'attelage ou un axe vertical traversant une chape fixée sur l'échelle (16) d'attelage du tracteur (5).

Le dispositif (1) selon l'invention comporte avantageusement un moyen de centrage (44). Celui-ci est conçu pour coopérer avec l'élément (13) du tracteur (5) afin de limiter un déplacement de la deuxième partie (28) par rapport audit élément (13) horizontalement et perpendiculairement à l'axe longitudinal (31). Le moyen de centrage (44) permet de mieux guider la deuxième partie (28) par rapport à l'élément (13) du tracteur (5) lorsque le moyen de butée (41) est rapproché dudit élément (13). Le moyen de centrage (44) facilite donc la mise en appui du moyen de butée (41) contre l'élément (13). En sus, le moyen de centrage (44) permet au dispositif (1) de reprendre partiellement les efforts transversaux exercés sur l'attelage (8) du tracteur (5) par la machine (2) attelée. Le moyen de centrage (44) apporte donc un surcroît de rigidité et de stabilité à l'attelage (8) du tracteur (5).

Le moyen de centrage (44) comporte de préférence la au moins une portion creusée (42). Le creux (43) de cette portion creusée (42) unit deux faces (45) latérales qui assurent la fonction de centrage de la deuxième partie (28) par rapport à l'élément (13) du tracteur (5).

Selon une caractéristique avantageuse de l'invention, le moyen de butée (41) limite une rotation de la deuxième partie (28) par rapport à l'élément (13) du tracteur (5) autour d'un axe sensiblement parallèle à l'axe longitudinal (31). De la sorte, le dispositif (1) encaisse une part importante des efforts de torsion autour de l'axe longitudinal (31), ce qui bénéficie tout à la fois à la stabilité de la machine (2) dans un plan perpendiculaire à la direction d'avancement (A), et à la durée de vie des moyens d'attelage respectifs de la machine (2) et du tracteur (5).

De préférence, la deuxième partie (28) comporte une plaque supérieure (32) et une plaque inférieure (33). Suivant une variante de réalisation de l'invention, lesdites plaques (32 et 33) comportent chacune une extrémité frontale (46), et ces dernières convergent verticalement l'une vers l'autre. En sus, le moyen de butée (41) comporte les extrémités frontales (46) respectives. Cette variante de réalisation permet au moyen de butée (41) de coopérer avec un élément (13) du tracteur (5) comportant une fente horizontale (15). Lors de la connexion du dispositif (1) au tracteur (5), la deuxième partie (28) est introduite à l'intérieur de la fente (15). En raison des extrémités frontales (46) convergentes, cette introduction se fait aisément et progressivement jusqu'au moment où la deuxième partie (28) vient en appui à l'intérieur de la fente (15). De plus, l'espace existant entre les plaques supérieure et inférieure (32 et 33) permet à leurs extrémités frontales (46) respectives de se déformer de manière élastique pour se rapprocher légèrement l'une de l'autre lorsque la deuxième partie (28) est appuyée au sein de la fente (15). Ceci autorise d'une part l'immobilisation de la deuxième partie (28) dans des fentes plus ou moins étroites. D'autre part, l'appui et l'immobilisation de la deuxième partie (28) dans la fente (15) sont obtenus par léger coincement mutuel des extrémités frontales (46) dans la fente (15).

Dans cette variante de réalisation, chaque extrémité frontale (46) comporte avantageusement une portion creusée (42) séparant deux zones d'appui latérales (47). Chaque zone d'appui latérale (47) de la plaque supérieure (32) converge verticalement vers une zone d'appui latérale (47) de la plaque inférieure (33). De cette manière, la deuxième partie (28) vient en appui et s'immobilise dans la fente (15) par appui et coincement dans la fente (15) des zones d'appui latérales (47) de la plaque supérieure (32) et de celles de la plaque inférieure (33). Par contre, les parties médianes respectives desdites plaques (32 et 33) ne sont pas, ou sont à peine, en appui à l'intérieur de la fente (15). Chacune des plaques supérieure et inférieure (32 et 33) est donc immobilisée dans la fente (15) essentiellement sur ses zones d'appui latérales (47) respectives distantes l'une de l'autre. Ainsi, la liaison entre le dispositif (1) et le tracteur (5) présente une grande rigidité en torsion autour d'un axe sensiblement parallèle à la direction d'avancement (A).

Enfin, l'invention prévoit de manière avantageuse que le déplacement de la deuxième partie (28) soit limité entre une première position extrême et une deuxième position extrême. Ces positions extrêmes sont obtenues au moyen respectivement d'une première butée et d'une deuxième butée agissant sur la deuxième partie (28).

Deux variantes de réalisation avantageuses de l'invention vont désormais être décrites plus en détail.

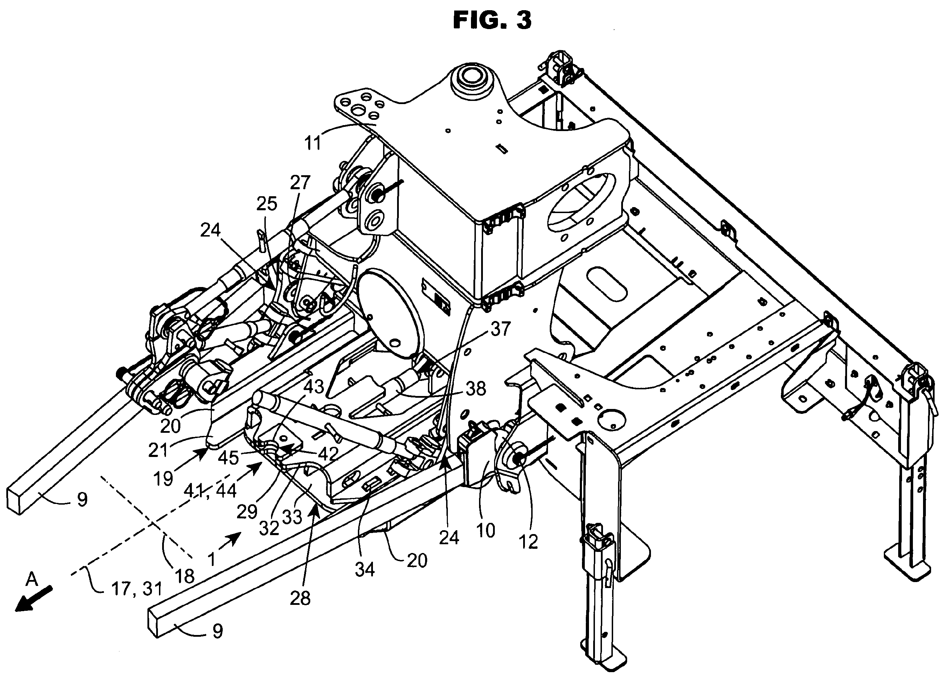

Ainsi qu'il ressort des figures 3 à 9, le dispositif (1) comporte une direction longitudinale (17) sensiblement parallèle à la direction d'avancement (A) lorsque la machine (2) est attelée au tracteur (5) avec le dispositif (1) en place. L'axe longitudinal (31) est parallèle à la direction longitudinale (17). Une direction transversale (18) du dispositif (1) est perpendiculaire à cette direction longitudinale (17). La première partie (19) est un cadre. Ce cadre comporte deux poutrelles (20) latérales. Ces poutrelles (20) sont sensiblement parallèles entre elles. Les poutrelles (20) s'étendent sensiblement dans la direction d'avancement (A) du tracteur (5). Les poutrelles (20) s'étendent sensiblement à l'horizontale. Les poutrelles (20) sont liées l'une à l'autre par une plaque intermédiaire (21). Cette plaque intermédiaire (21) est plane. Elle s'étend sensiblement horizontalement entre les poutrelles (20). La première partie (19) comporte une partie arrière (22) délimitée par la première extrémité longitudinale (23). La première partie (19) comporte deux moyens d'attache (24). La patte (25) de chaque moyen d'attache (24) est liée à une poutrelle (20) respective. En l'occurrence, chaque patte (25) est liée à une face extérieure d'une poutrelle (20) respective, de sorte que la face tournée vers l'extérieur de chaque patte (25) forme une extrémité latérale (26) respective du dispositif (1). Chaque patte (25) est une pièce de tôle rigide qui s'étend vers le haut depuis la poutrelle (20) correspondante. Chaque patte (25) est traversée par plusieurs trous pouvant accueillir les éléments démontables (27) de fixation au bâti (11) de la machine (2), par exemple des vis. Préalablement à l'attelage de la machine (2) au tracteur (5), le dispositif (1) est solidarisé au bâti (11) de la machine (2) en position de dépose, notamment à une partie frontale inférieure dudit bâti (11), au moyen des éléments démontables (27). Les pattes (25) des moyens d'attache (24) sont séparées l'une de l'autre d'une distance légèrement inférieure à celle qui sépare les organes d'accrochage (12) du bâti (11) de la machine (2).

Entre les poutrelles (20) de la première partie (19) s'étend la deuxième partie (28). Dans les deux variantes de réalisation des figures 3 à 9, la deuxième partie (28) est une langue. Cette langue présente en particulier une dimension verticale - épaisseur - nettement plus faible que ses dimensions longitudinale et transversale. Cette géométrie de la deuxième partie (28) lui confère un encombrement vertical réduit lorsque le dispositif (1) est connecté au tracteur (5). La deuxième partie (28) comporte à l'avant la deuxième extrémité longitudinale (29). Cette deuxième extrémité longitudinale (29) forme l'extrémité longitudinale du dispositif (1) opposée à la première extrémité longitudinale (23) de la première partie (19). L'arrière de la deuxième partie (28) est délimité par la troisième extrémité longitudinale (30). Celle-ci est donc située entre les première et deuxième extrémités longitudinales (23 et 29). La deuxième partie (28) peut coulisser suivant l'axe longitudinal (31) du dispositif (1). La plaque supérieure (32) et la plaque inférieure (33) de la deuxième partie (28) sont en grande partie planes. Elles s'étendent essentiellement parallèlement à la plaque intermédiaire (21) de la première partie (19). Les plaques supérieure et inférieure (32 et 33) sont liées l'une à l'autre au moyen d'entretoises (34) soudées. Ces entretoises (34) sont disposées en deux rangées (35) qui s'étendent suivant l'axe longitudinal (31). Chaque rangée (35) est disposée à proximité de la face intérieure d'une poutrelle (20) correspondante. La plaque intermédiaire (21) comporte deux fentes (36) orientées suivant l'axe longitudinal (31). Chaque rangée (35) d'entretoises (34) peut se déplacer dans la fente (36) correspondante suivant l'axe longitudinal (31). La largeur de chaque fente (36) est égale ou légèrement supérieure à la dimension de chaque rangée (35) d'entretoises (34) mesurée suivant la direction transversale (18) et parallèlement à la surface des plaques (21, 32, 33). En sus, la dimension de chaque rangée (35) d'entretoises (34) mesurée perpendiculairement à la surface des plaques (21, 32, 33), est égale ou légèrement supérieure à l'épaisseur de la plaque intermédiaire (21). Par ailleurs, la plaque intermédiaire (21) est insérée entre les plaques supérieure et inférieure (32 et 33). Grâce à cet agencement, la liaison coulissante de la langue formant la deuxième partie (28) par rapport au cadre formant la première partie (19), est plus exactement une liaison glissière ayant pour axe l'axe longitudinal (31).

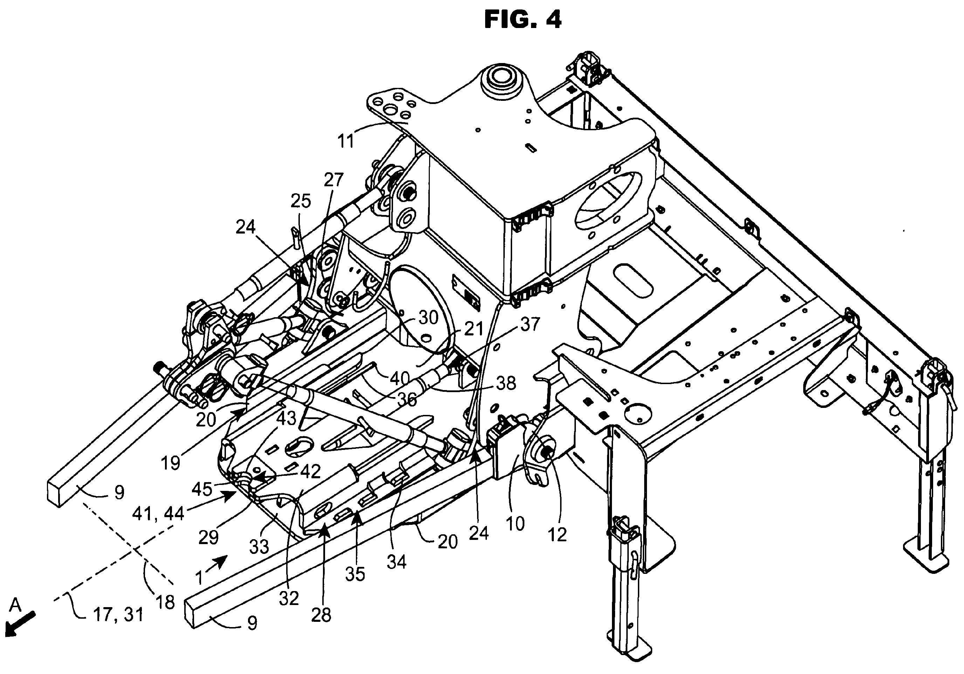

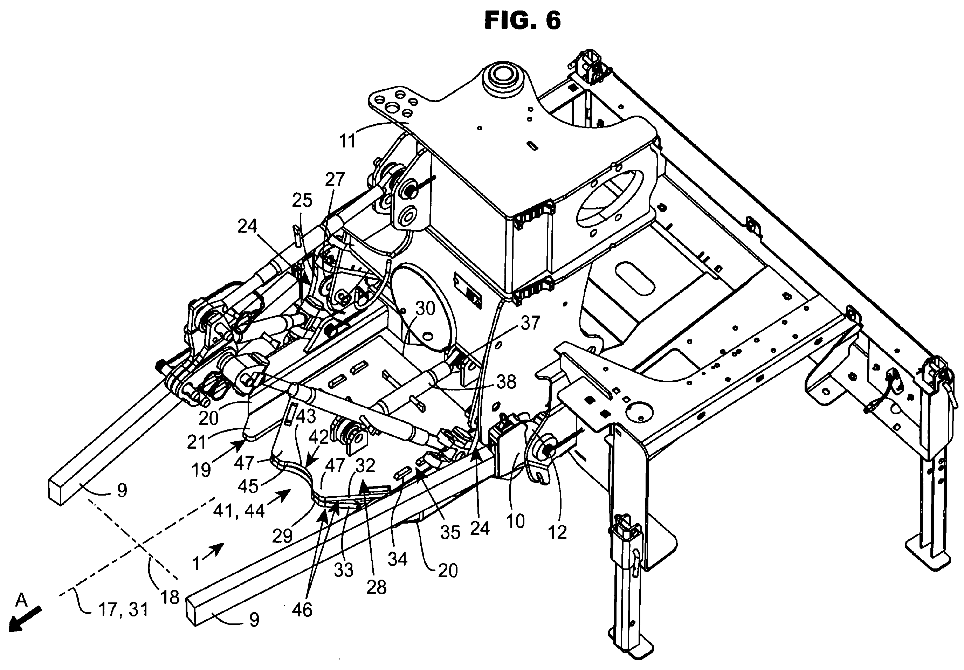

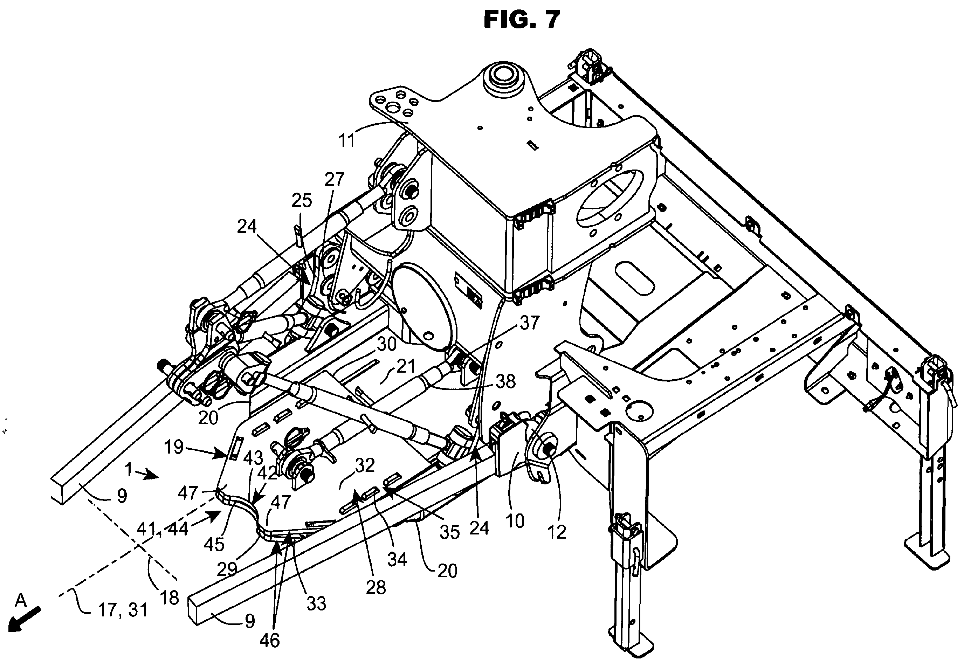

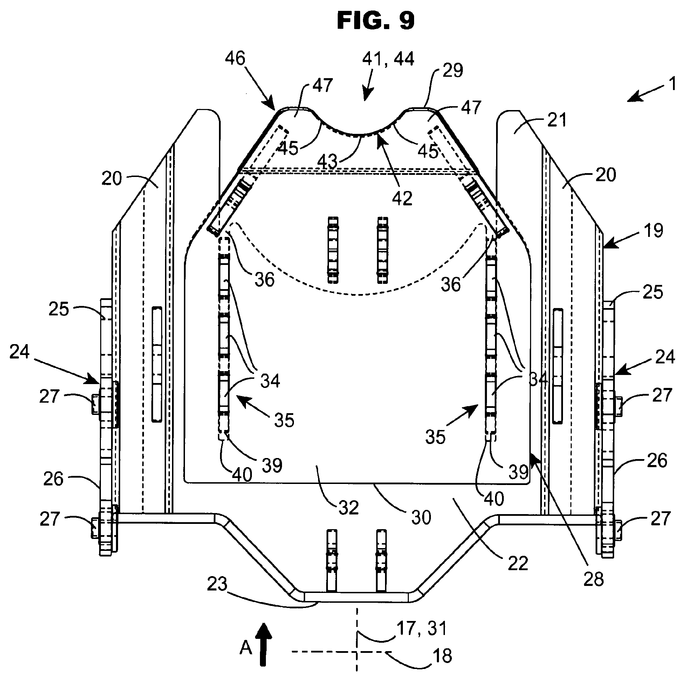

Dans la première position extrême, représentée sur les figures 3 et 6, la deuxième partie (28) est rapprochée au maximum de la première extrémité longitudinale (23) de la première partie (19). La première position extrême est notamment utilisée lorsque la machine (2) portant le dispositif (1) vient à être accrochée au tracteur (5). Cette position est également employée lors des opérations de dépose de la machine (2), ainsi que de dépose et remisage du dispositif (1). Dans la deuxième position extrême, illustrée aux figures 4 et 7, la deuxième partie (28) est éloignée au maximum de cette même extrémité (23). Le déplacement de la deuxième partie (28) entre ces positions est opéré par l'élément à longueur variable (38). Celui-ci est articulé entre la partie arrière (22) de la première partie (19) et le dessus de la plaque supérieure (32) de la deuxième partie (28). L'élément à longueur variable (38) est par exemple un vérin, notamment un vérin hydraulique. Ainsi qu'il ressort notamment de la vue de détail donnée à la figure 9, au sein de chaque rangée (35) d'entretoises (34), l'entretoise (34) la plus proche de la première extrémité longitudinale (23) comporte une face (39) pouvant venir en appui contre le creux (40) de la fente (36) correspondante. Cet agencement forme la première butée agissant sur la deuxième partie (28) mobile. Cette première butée définit la première position extrême. La deuxième butée permettant d'obtenir la deuxième position extrême est par exemple une fin de course de l'élément à longueur variable (38), notamment une fin de course du vérin.

La deuxième partie (28) comporte le moyen de butée (41) situé au voisinage de la deuxième extrémité longitudinale (29). A cette fin, et suivant la première variante de réalisation illustrée aux figures 3 à 5, la deuxième partie (28) comporte une portion creusée (42) s'étendant depuis la deuxième extrémité longitudinale (29) en direction de la première extrémité longitudinale (23). Cette portion creusée (42) a par exemple la forme d'une fourchette ouverte vers l'élément (13) du tracteur (5). Une telle portion creusée (42) peut aisément coopérer avec un piton (14) d'attelage, un axe ou un barreau vertical, par exemple. La portion creusée (42) est par exemple obtenue par une découpe pratiquée dans la partie frontale de la deuxième partie (28), par exemple dans la partie frontale de la plaque supérieure (32) de la langue. La portion creusée (42) peut aussi être obtenue à partir d'une pièce supplémentaire fixée à la deuxième partie (28), par exemple à la plaque supérieure (32). Dans cette première variante de réalisation, la portion creusée (42) constitue le moyen de butée (41). En effet, le creux (43) de la portion creusée (42) est la partie venant en appui contre l'élément (13) du tracteur (5) pour mettre en tension l'attelage (8) du tracteur (5). Dans cette même variante de réalisation, la portion creusée (42) constitue également le moyen de centrage (44) du dispositif (1) par rapport audit élément (13). Dans ce but, les deux faces (45) de la portion creusée (42) réunies dans leur partie arrière par le creux (43), sont sensiblement parallèles entre elles ou bien, de préférence, divergentes en direction du tracteur.

Suivant la deuxième variante de réalisation illustrée aux figures 6 à 8, la plaque supérieure (32) et la plaque inférieure (33) de la deuxième partie (28) comportent chacune une extrémité frontale (46), et ces extrémités frontales (46) convergent verticalement l'une vers l'autre. Ceci signifie que l'espace compris entre les plaques supérieure et inférieure (32 et 33), sensiblement égal à l'épaisseur de la plaque intermédiaire (21), se resserre au niveau desdites extrémités frontales (46). Notamment, les extrémités frontales (46) sont donc distantes d'une valeur inférieure à l'épaisseur de la plaque intermédiaire (21). La langue formant la deuxième partie (28) présente ainsi, suivant une vue latérale du dispositif (1), une forme de pointe orientée en direction du tracteur (5). Dans cette deuxième variante de réalisation, les extrémités frontales (46) convergentes forment un moyen de butée (41) bien adapté à un élément (13) du tracteur (5) en forme de fente horizontale (15). Lesdites extrémités frontales (46) peuvent en effet venir s'introduire à l'intérieur d'une telle fente (15). En sus, chaque extrémité frontale (46) d'une plaque (32, 33) comporte une portion creusée (42) en direction de la première extrémité longitudinale (23). Chaque portion creusée (42) sépare deux zones d'appui latérales (47) d'une plaque (32, 33) correspondante. L'appui des plaques supérieure et inférieure (32 et 33) à l'intérieur de la fente horizontale (15) se fait alors essentiellement, voire uniquement, sur lesdites zones d'appui latérales (47). Cet agencement permet au moyen de butée (41) d'assurer une fonction supplémentaire consistant à limiter une rotation de la deuxième partie (28) à l'intérieur de la fente (15) autour de l'axe longitudinal (31). Il n'en demeure pas moins que, grâce aux portions creusées (42) des plaques supérieure et inférieure (32 et 33), le moyen de butée (41) conforme à cette deuxième variante de réalisation est compatible avec un élément (13) de type piton (14), barreau ou axe vertical, de façon tout à fait similaire au moyen de butée (41) conforme à la première variante de réalisation. Avec un élément (13) du tracteur (5) configuré de la sorte, les portions creusées (42) de cette deuxième variante de réalisation remplissent également une fonction de moyen de centrage (44) comme le fait la portion creusée (42) de la première variante de réalisation.

Chaque poutrelle (20) de la première partie peut, par exemple à sa face supérieure, porter un support pour la connexion d'une bielle supplémentaire au troisième point du tracteur (5). Chaque support peut notamment être disposé à proximité de la patte (25) du moyen d'attache (24) correspondant. Dans ce cas, le dispositif (1) selon l'invention permet de rattraper également les jeux existant dans les points d'accrochages inférieurs et supérieurs de ces bielles supplémentaires.

Il est bien évident que l'invention n'est pas limitée aux variantes de réalisation décrites ci-dessus et représentées sur les figures annexées. Des modifications restent possibles dans la limite définie par les revendications.

## Revendications

1. Dispositif (1) pour rigidifier un attelage (8) trois points d'un tracteur (5), cet attelage (8) comportant deux bras inférieurs (9) munis de points d'attelage (10) pouvant être reliés à des organes d'accrochage (12) d'un bâti (11) d'une machine (2) comportant des outils (6) déportés latéralement d'un côté du tracteur (5) pendant le travail, ***caractérisé en ce qu'il*** comporte une première partie (19) avec une première extrémité longitudinale (23) et avec au moins un moyen d'attache (24) pour la liaison du dispositif (1) au bâti (11) de la machine (2), que le dispositif (1) comporte une deuxième partie (28) en liaison coulissante avec la première partie (19) suivant un axe longitudinal (31) du dispositif (1), que la deuxième partie (28) comporte un moyen de butée (41) conçu pour coopérer avec un élément (13) du tracteur (5), et que le dispositif (1) comporte un moyen d'effort (37) pour appuyer le moyen de butée (41) contre l'élément (13) du tracteur (5) au moins suivant l'axe longitudinal (31).

2. Dispositif selon la revendication 1, ***caractérisé en ce que*** la première partie (19) porte deux moyens d'attache (24) pour relier le dispositif (1) au bâti (11) de la machine (2) en au moins deux points du bâti (11) voisins des organes d'accrochage (12), préalablement à la mise en appui du moyen de butée (41) contre l'élément (13) du tracteur (5).

3. Dispositif selon la revendication 2, ***caractérisé en ce que*** chaque moyen d'attache (24) comporte une patte (25) liée à la première partie (19) et au moins un élément démontable (27) pour lier rigidement la patte (25) au bâti (11) de la machine (2).

4. Dispositif selon la revendication 2 ou 3, ***caractérisé en ce qu'***il comporte deux extrémités latérales (26), et que chaque moyen d'attache (24) est porté par la première partie (19) au voisinage immédiat d'une extrémité latérale (26) respective.

5. Dispositif selon l'une quelconque des revendications 1 à 4, ***caractérisé en ce que*** la deuxième partie (28) peut être déplacée par rapport à la première partie (19) entre une première position et une deuxième position, et que l'encombrement du dispositif (1) suivant l'axe longitudinal (31) est plus faible dans la première position que dans la deuxième position.

6. Dispositif selon la revendication 5, ***caractérisé en ce que*** la deuxième partie (28) est déplacée par le moyen d'effort (37) de la première position vers la deuxième position pour mettre le moyen de butée (41) en appui contre l'élément (13) du tracteur (5).

7. Dispositif selon l'une quelconque des revendications 1 à 6, ***caractérisé en ce que*** la liaison coulissante est une liaison glissière orientée suivant l'axe longitudinal (31).

8. Dispositif selon l'une quelconque des revendications 1 à 7, ***caractérisé en ce que*** le moyen d'effort (37) comporte un élément à longueur variable (38) disposé entre la première partie (19) et la deuxième partie (28).

9. Dispositif selon l'une quelconque des revendications 1 à 8, ***caractérisé en ce que*** la deuxième partie (28) est délimitée par une deuxième extrémité longitudinale (29) opposée à la première extrémité longitudinale (23) et par une troisième extrémité longitudinale (30) située entre les première et deuxième extrémités longitudinales (23 et 28), et que le moyen de butée (41) est situé au voisinage de la deuxième extrémité longitudinale (29).

10. Dispositif selon l'une quelconque des revendications 1 à 9, ***caractérisé en ce que*** la deuxième partie (28) comporte au moins une portion creusée (42) en direction de la première extrémité longitudinale (23).

11. Dispositif selon la revendication 10, ***caractérisé en ce que*** la au moins une portion creusée (42) est située au voisinage de la deuxième extrémité longitudinale (29).

12. Dispositif selon la revendication 10 ou 11, ***caractérisé en ce que*** le moyen de butée (41) comporte la au moins une portion creusée (42).

13. Dispositif selon l'une quelconque des revendications 1 à 12, ***caractérisé en ce qu'***il comporte un moyen de centrage (44) conçu pour coopérer avec l'élément (13) du tracteur (5) pour limiter un déplacement de la deuxième partie (28) par rapport audit élément (13) horizontalement et perpendiculairement à l'axe longitudinal (31).

14. Dispositif selon la revendication 13 et la revendication 10 ou 11, ***caractérisé en ce que*** le moyen de centrage (44) comporte la au moins une portion creusée (42).

15. Dispositif selon l'une quelconque des revendications 1 à 14, ***caractérisé en ce que*** le moyen de butée (41) limite une rotation de la deuxième partie (28) par rapport à l'élément (13) du tracteur (5) autour d'un axe sensiblement parallèle à l'axe longitudinal (31).

16. Dispositif selon l'une quelconque des revendications 1 à 15, ***caractérisé en ce que*** la deuxième partie (28) comporte une plaque supérieure (32) et une plaque inférieure (33) comportant chacune une extrémité frontale (46), et que les extrémités frontales (46) convergent verticalement l'une vers l'autre.

17. Dispositif selon la revendication 16, ***caractérisé en ce que*** le moyen de butée (41) comporte les extrémités frontales (46) respectives.

18. Dispositif selon la revendication 16 ou 17, ***caractérisé en ce que*** chaque extrémité frontale (46) comporte une portion creusée (42) séparant deux zones d'appui latérales (47).

19. Dispositif selon l'une quelconque des revendications 1 à 18, ***caractérisé en ce que*** le déplacement de la deuxième partie (28) est limité entre une première position extrême et une deuxième position extrême, au moyen respectivement d'une première butée et d'une deuxième butée agissant sur la deuxième partie (28).

20. Machine ***caractérisée en ce qu'***elle comporte un dispositif (1) selon l'une quelconque des revendications 1 à 19.

## Patentansprüche

1. Vorrichtung (1) zur Versteifung einer Dreipunktkupplung (8) eines Traktors (5), wobei diese Kupplung (8) zwei untere Arme (9) umfasst, die mit Kupplungspunkten (10) versehen sind, die mit Kupplungselementen (12) eines Gestells (11) einer Maschine (2) verbunden werden können, die Werkzeuge (6) umfasst, die auf einer Seite des Traktors (5) während der Arbeit seitlich verschoben werden, ***dadurch gekennzeichnet,* dass** sie einen ersten Teil (19) mit einem ersten Längsende (23) und mit mindestens einem Kupplungsmittel (24) für die Verbindung der Vorrichtung (1) mit dem Gestell (11) der Maschine (2) umfasst, dass die Vorrichtung (1) einen zweiten Teil (28) in Gleitverbindung mit dem ersten Teil (19) gemäß einer Längsachse (31) der Vorrichtung (1) umfasst, dass der zweite Teil (28) ein Anschlagmittel (41) umfasst, das dafür ausgelegt ist, um mit einem Element (13) des Traktors (5) zusammenzuwirken, und dass die Vorrichtung (1) ein Beanspruchungsmittel (37) umfasst, um das Anschlagmittel (41) gegen das Element (13) des Traktors (5) mindestens gemäß der Längsachse (31) zu drücken.

2. Vorrichtung nach Anspruch 1, ***dadurch gekennzeichnet,* dass** der erste Teil (19) zwei Kupplungsmittel (24) trägt, um die Vorrichtung (1) mit dem Gestell (11) der Maschine (2) an mindestens zwei mit den Kupplungselementen (12) benachbarten Punkten des Gestells (11) zu verbinden, bevor das Anschlagmittel (41) gegen das Element (13) des Traktors (5) gedrückt wird.

3. Vorrichtung nach Anspruch 2, ***dadurch gekennzeichnet*, dass** jedes Kupplungsmittel (24) einen Lappen (25) umfasst, der mit dem ersten Teil (19) verbunden ist, und mindestens ein abnehmbares Element (27), um den Lappen (25) mit dem Gestell (11) der Maschine (2) fest zu verbinden.

4. Vorrichtung nach Anspruch 2 oder 3, ***dadurch gekennzeichnet*, dass** sie zwei seitliche Enden (26) umfasst und dass jedes Kupplungsmittel (24) vom ersten Teil (19) in unmittelbarer Nähe eines jeweiligen seitlichen Endes (26) getragen wird.

5. Vorrichtung nach irgend einem der Ansprüche 1 bis 4, ***dadurch gekennzeichnet*, dass** der zweite Teil (28) in Bezug auf den ersten Teil (19) zwischen einer ersten Stellung und einer zweiten Stellung verschoben werden kann und dass die Abmessung der Vorrichtung (1) gemäß der Längsachse (31) in der ersten Stellung geringer ist als in der zweiten Stellung.

6. Vorrichtung nach Anspruch 5, ***dadurch gekennzeichnet*, dass** der zweite Teil (28) vom Beanspruchungsmittel (37) von der ersten Stellung in die zweite Stellung verschoben wird, um das Anschlagmittel (41) gegen das Element (13) des Traktors (5) zu drücken.

7. Vorrichtung nach irgend einem der Ansprüche 1 bis 6, ***dadurch gekennzeichnet*, dass** die Gleitverbindung ein gemäß der Längsachse (31) ausgerichtetes Schubgelenk ist.

8. Vorrichtung nach irgend einem der Ansprüche 1 bis 7, ***dadurch gekennzeichnet,* dass** das Beanspruchungsmittel (37) ein Element mit variabler Länge (38) umfasst, das zwischen dem ersten Teil (19) und dem zweiten Teil (28) angeordnet ist.

9. Vorrichtung nach irgend einem der Ansprüche 1 bis 8, ***dadurch gekennzeichnet,* dass** der zweite Teil (28) von einem zweiten Längsende (29) begrenzt wird, das dem ersten Längsende (23) gegenüberliegt, und von einem dritten Längsende (30), das sich zwischen dem ersten und zweiten Längsende (23 und 28) befindet, und dass sich das Anschlagmittel (41) in der Nähe des zweiten Längsendes (29) befindet.

10. Vorrichtung nach irgend einem der Ansprüche 1 bis 9, ***dadurch gekennzeichnet,* dass** der zweite Teil (28) mindestens ein vertieftes Teil (42) in Richtung des ersten Längsendes (23) umfasst.

11. Vorrichtung nach Anspruch 10, ***dadurch gekennzeichnet,* dass** sich das mindestens eine vertiefte Teil (42) in der Nähe des zweiten Längsendes (29) befindet.

12. Vorrichtung nach Anspruch 10 oder 11, ***dadurch gekennzeichnet,* dass** das Anschlagmittel (41) das mindestens eine vertiefte Teil (42) umfasst.

13. Vorrichtung nach irgend einem der Ansprüche 1 bis 12, ***dadurch gekennzeichnet,* dass** sie ein Zentrierungsmittel (44) umfasst, das dafür ausgelegt ist, um mit dem Element (13) des Traktors (5) zusammenzuwirken, um eine Verschiebung des zweiten Teils (28) in Bezug auf das Element (13) horizontal und senkrecht zur Längsachse (31) zu begrenzen.

14. Vorrichtung nach Anspruch 13 und nach Anspruch 10 oder 11, ***dadurch gekennzeichnet,* dass** das Zentrierungsmittel (44) das mindestens eine vertiefte Teil (42) umfasst.

15. Vorrichtung nach irgend einem der Ansprüche 1 bis 14, ***dadurch gekennzeichnet,* dass** das Anschlagmittel (41) eine Drehung des zweiten Teils (28) in Bezug auf das Element (13) des Traktors (5) rund um eine zur Längsachse (31) im Wesentlichen parallelen Achse begrenzt.

16. Vorrichtung nach irgend einem der Ansprüche 1 bis 15, ***dadurch gekennzeichnet,* dass** der zweite Teil (28) eine obere Platte (32) und eine untere Platte (33) umfasst, die jeweils ein vorderes Ende (46) umfassen, und dass die vorderen Enden (46) vertikal zueinander laufen.

17. Vorrichtung nach Anspruch 16, ***dadurch gekennzeichnet,* dass** das Anschlagmittel (41) die jeweiligen vorderen Enden (46) umfasst.

18. Vorrichtung nach Anspruch 16 oder 17, ***dadurch gekennzeichnet,* dass** jedes vordere Ende (46) ein vertieftes Teil (42) umfasst, das zwei seitliche Abstützungsbereiche (47) trennt.

19. Vorrichtung nach irgend einem der Ansprüche 1 bis 18, ***dadurch gekennzeichnet,* dass** die Verschiebung des zweiten Teils (28) zwischen einer ersten Endstellung und einer zweiten Endstellung mittels jeweils eines ersten Anschlags und eines zweiten Anschlags begrenzt wird, die auf den zweiten Teil (28) einwirken.

20. Maschine, ***dadurch gekennzeichnet,* dass** sie eine Vorrichtung (1) nach irgend einem der Ansprüche 1 bis 19 umfasst.

## Claims

1. Device (1) to stiffen a three point hitch (8) of a tractor (5), this hitch (8) including two lower arms (9) fitted with hitching points (10) that can be connected to hitching elements (12) of a framework (11) of a machine (2) including tools (6) laterally offset on one side of the tractor (5) during the work, ***characterised in* that** it includes a first section (19) with a first longitudinal end (23) and at least one hitching means (24) for connecting the device (1) to the framework (11) of the machine (2), that the device (1) includes a second section (28) that has a sliding connection with the first section (19) along a longitudinal axis (31) of the device (1), that the second section (28) includes a stop means (41) designed to cooperate with an element (13) of the tractor (5), and that the device (1) includes a stressing means (37) to rest the stop means (41) against the element (13) of the tractor (5) at least along the longitudinal axis (31).

2. Device according to claim 1, ***characterised in* that** the first section (19) supports two hitching means (24) to connect the device (1) to the framework (11) of the machine (2) at a minimum of two points of the framework (11) next to the hitching elements (12), before the stop means (41) comes to rest against the element (13) of the tractor (5).

3. Device according to claim 2, ***characterised in* that** each hitching means (24) includes a cramp (25) connected to the first section (19) and at least one removable element (27) to rigidly connect the cramp (25) to the framework (11) of the machine (2).

4. Device according to claim 2 or 3, ***characterised in* that** it includes two side ends (26) and that each hitching means (24) is supported by the first section (19) in the immediate vicinity of a respective side end (26).

5. Device according to any one of claims 1 to 4, ***characterised in* that** the second section (28) can be moved relative to the first section (19) between a first position and a second position, and that the bulk of the device (1) along the longitudinal axis (31) is smaller in the first position than in the second position.

6. Device according to claim 5, ***characterised in* that** the second section (28) is moved by the stressing means (37) of the first position towards the second position to bring the stop means (41) to rest against the element (13) of the tractor (5).

7. Device according to any one of claims 1 to 6, ***characterised in* that** the sliding connection is a sliding joint oriented along the longitudinal axis (31).

8. Device according to any one of claims 1 to 7, ***characterised in* that** the stressing means (37) includes a variable-length element (38) positioned between the first section (19) and the second section (28).

9. Device according to any one of claims 1 to 8, ***characterised in* that** the second section (28) is delimited by a second longitudinal end (29) opposite the first longitudinal end (23) and by a third longitudinal end (30) situated between the first and second longitudinal ends (23 and 28), and that the stop means (41) is situated in the vicinity of the second longitudinal end (29).

10. Device according to any one of claims 1 to 9, ***characterised in* that** the second section (28) includes at least one hollow part (42) in the direction of the first longitudinal end (23).

11. Device according to claim 10, ***characterised in* that** the at least one hollow part (42) is situated in the vicinity of the second longitudinal end (29).

12. Device according to claim 10 or 11, ***characterised in* that** the stop means (41) includes the at least one hollow part (42).

13. Device according to any one of claims 1 to 12, ***characterised in* that** it includes a centring means (44) designed to cooperate with the element (13) of the tractor (5) to limit the movement of the second section (28) relative to the said element (13) horizontally and perpendicular to the longitudinal axis (31).

14. Device according to claim 13 and claim 10 or 11, ***characterised in* that** the centring means (44) includes the at least one hollow part (42).

15. Device according to any one of claims 1 to 14, ***characterised in* that** the stop means (41) limits the rotation of the second section (28) relative to the element (13) of the tractor (5) around an axis substantially parallel to the longitudinal axis (31).

16. Device according to any one of claims 1 to 15, ***characterised in* that** the second section (28) includes an upper plate (32) and a lower plate (33), each including a front end (46), and that the front ends (46) vertically converge towards each other.

17. Device according to claim 16, ***characterised in* that** the stop means (41) includes the respective front ends (46).

18. Device according to claim 16 or 17, ***characterised in* that** each front end (46) includes a hollow part (42) separating two side support zones (47).

19. Device according to any one of claims 1 to 18, ***characterised in* that** the movement of the second section (28) is limited between a first end position and a second end position, by means respectively of a first stop and a second stop acting on the second section (28).

20. Machine ***characterised in* that** it includes a device (1) according to any one of claims 1 to 19.
